Europäisches Patentamt

European Patent Office

Office européen des brevets

(11) Numéro de publication: **0 036 796**
**A1**

## DEMANDE DE BREVET EUROPEEN

(21) Numéro de dépôt: 81400358.8

(22) Date de dépôt: 09.03.81

(51) Int. Cl.³: **B 60 J 3/02**

(30) Priorité: 21.03.80 FR 8006312

(71) Demandeur: **COMPAGNIE INDUSTRIELLE DE MECANISMES en abrégé C.I.M. Société dite, 6, Rue Barbès, F-92302 Levallois Perret (FR)**

(43) Date de publication de la demande: 30.09.81 **Bulletin 81/39**

(72) Inventeur: **Vigo, Gilles, 43, Avenue de Verdun, F-88160 Thillot (FR)**

(74) Mandataire: **Lavoix, Jean et al, c/o Cabinet Lavoix 2, Place D'Estienne D'Orves, F-75441 Paris Cedex 09 (FR)**

(84) Etats contractants désignés: **DE GB IT SE**

(54) **Dispositif de montage d'un bras de support et d'articulation de pare-soleil de véhicule.**

(57) Le bras (2) du pare-soleil est enfilé dans un alésage horizontal (25) d'un palier (5) et dans un orifice (27) d'un tirant (6) sollicité élastiquement vers le haut. Ce tirant est guidé dans un support (4) fixé au pavillon (19) du véhicule. La fixation du support (4), amovible par le bas, peut s'effectuer au moyen d'une bague élastique expansible (16) attaquée par un poussoir (8) celui-ci étant guidé par le support (4) et attaqué à son tour par la face supérieure du palier (5).

Application aux véhicules automobiles.

EP 0 036 796 A1

1
Dispositif de montage d'un bras de support et d'articulation de pare-soleil de véhicule.-

La présente invention est relative à un dispositif de montage d'un bras de support et d'articulation de pare-soleil de véhicule, du type comprenant un support destiné à être fixé de façon amovible devant un perçage d'un élément de pavillon de véhicule et présentant un trou à peu près vertical, et un palier monté rotatif dans ce support autour de l'axe dudit trou et présentant un trou à peu près vertical coaxial à celui du support et un trou à peu près horizontal destiné à recevoir le bras à rotation.

Le brevet US 2 698 958 montre un dispositif de ce type, qui permet au bras de tourner autour des deux axes avec un couple résistant déterminé, ce qui permet à son tour de rendre l'autre extrémité du bras rigidement solidaire du pare-soleil.

Cependant, dans ce dispositif connu, les deux mouvements de rotation comportent des moyens de réglage totalement indépendants les uns des autres, ce qui complique le dispositif et le rend relativement coûteux.

L'invention a pour but de fournir un dispositif de montage du bras permettant d'obtenir de façon plus économique un réglage satisfaisant des deux couples résistants.

A cet effet, l'invention a pour objet un dispositif de montage du type précité, caractérisé en ce que les deux trous du palier se rencontrent, en ce qu'un tirant est enfilé dans les deux trous verticaux et présente un orifice à peu près horizontal pour le passage du bras, et en ce qu'un organe élastique prenant appui sur la face supérieure du support sollicite le tirant vers le haut.

Ce dispositif se prête bien à l'obtention d'une position stable du bras autour de son propre axe, correspondant notamment à la position relevée du pare-soleil: il suffit pour cela que l'orifice du tirant présente un méplat inférieur destiné à coopérer, dans la position considérée du bras, avec un méplat prévu sur ce bras.

2

Dans un mode de réalisation, le support présente sur sa périphérie des trous à vis et éventuellement, sur sa face supérieure, une saillie de centrage dans le perçage de l'élément de pavillon.

Une autre possibilité conservant la faculté indispensable de démontage du dispositif depuis l'intérieur du véhicule est la suivante:sur la face supérieure du support fait saillie une bague radialement expansible qui présente une surface interne convergente vers le haut et dont le diamètre maximal au repos est un peu supérieur à celui dudit perçage, et un poussoir, qui possède des jambes traversant des passages verticaux du support qui entourent le trou vertical de celui-ci, présente à sa partie supérieure une surface périphérique convergente vers le haut et adaptée pour attaquer la surface intérieure de la bague expansible.

D'autres caractéristiques et avantages de l'invention ressortiront de la description qui va suivre, donnée à titre d'exemple non limitatif et en regard des dessins annexés, sur lequels :

la Fig. 1 est une vue en coupe, prise suivant la ligne 1-1 de la Fig. 2, d'un dispositif de montage suivant l'invention;

la Fig. 2 est une vue de ce dispositif prise en coupe suivant la ligne 2-2 de la Fig. 1;

la Fig. 3 est une vue en coupe longitudinale à plus grande échelle du support de ce dispositif;

la Fig. 4 est une vue de dessus de ce support;

la Fig. 5 est une vue en élévation latérale, avec coupe partielle, du poussoir du dispositif des Fig.1 et 2;

la Fig. 6 est une vue en coupe longitudinale du palier du même dispositif;

la Fig. 7 illustre le montage de ce dispositif;

3

la Fig. 8 représente en plan une languette utilisée pour ce montage;

la Fig. 9 est une vue en plan du support d'un autre mode de réalisation du dispositif de montage suivant l'invention;

la Fig. 10 est une vue en coupe longitudinale du support de la Fig. 9; et

la Fig. 11 est une vue analogue à la Fig. 1 du dispositif de montage utilisant le support des Fig. 9 et 10.

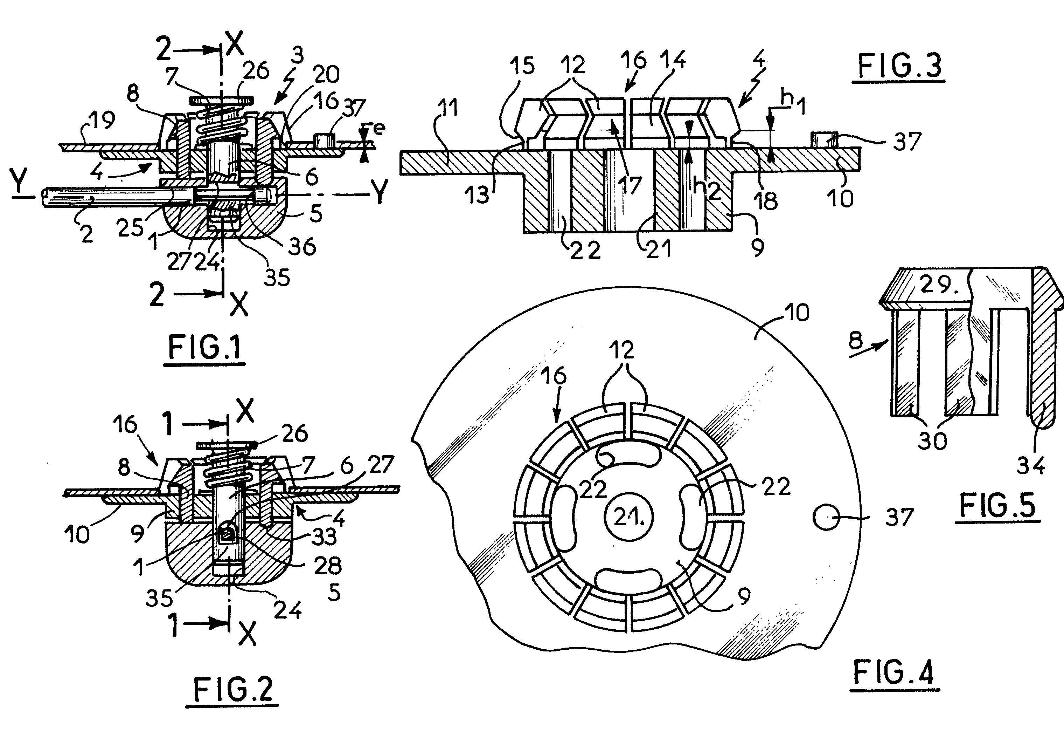

Suivant le mode d'exécution représenté aux Fig. 1 à 6, l'invention est appliquée au montage articulé suivant deux axes X-X vertical et Y-Y horizontal d'une extrémité 1 d'un bras 2 de section générale cylindrique constante dont l'autre extrémité (non représentée) est rigidement solidaire d'un pare-soleil de véhicule. Le dispositif de montage 3 est constitué de cinq éléments, à savoir un support 4, un palier 5, un tirant 6, un ressort hélicoïdal de compression 7 et un poussoir 8. Les éléments 4, 5, 6 et 8 sont en matière plastique moulée.

Le support 4 (Fig. 3 et 4) comprend un corps cylindrique 9 muni à son extrémité supérieure d'une collerette extérieure 10. Sur la face supérieure plane 11 de l'ensemble 9-10 font saillie une couronne de pattes 12 rattachées par un voile élastique vertical mince 13 à la face 11. Chaque patte 12 présente une face radialement intérieure 14 inclinée vers le haut et vers l'axe X-X, par exemple avec un angle de 60° par rapport à l'horizontale; extérieurement, elle se rattache au voile 13 par une face 15 légèrement inclinée vers le bas et vers l'axe X-X, par exemple avec un angle de 10° par rapport à l'horizontale.

Chaque patte 12 est séparée des pattes voisines par un intervalle radial. L'ensemble des pattes forme ainsi une bague 16 expansible élastiquement qui présente

4

intérieurement une surface à peu près conique 17 convergeant vers le haut et extérieurement, à sa base, une gorge circulaire 18 qui se rétrécit vers son fond d'une hauteur $\underline{h}^1$ à une hauteur $\underline{h}^2$. Le dispositif 3 est destiné à être monté sur une paroi 19 en tôle qui double intérieurement une partie du pavillon (non représenté) du véhicule et dont l'épaisseur $\underline{e}$ est comprise entre $\underline{h}^1$ et $\underline{h}^2$. La paroi 19 présente un perçage circulaire 20 dont le diamètre est légèrement inférieur au diamètre maximal au repos de la bague 16.

Le support 4 est traversé par un trou vertical 21 et, autour de celui-ci et à l'intérieur de la bague 16, par quatre passages verticaux 22 de forme arquée, à 90° les uns des autres.

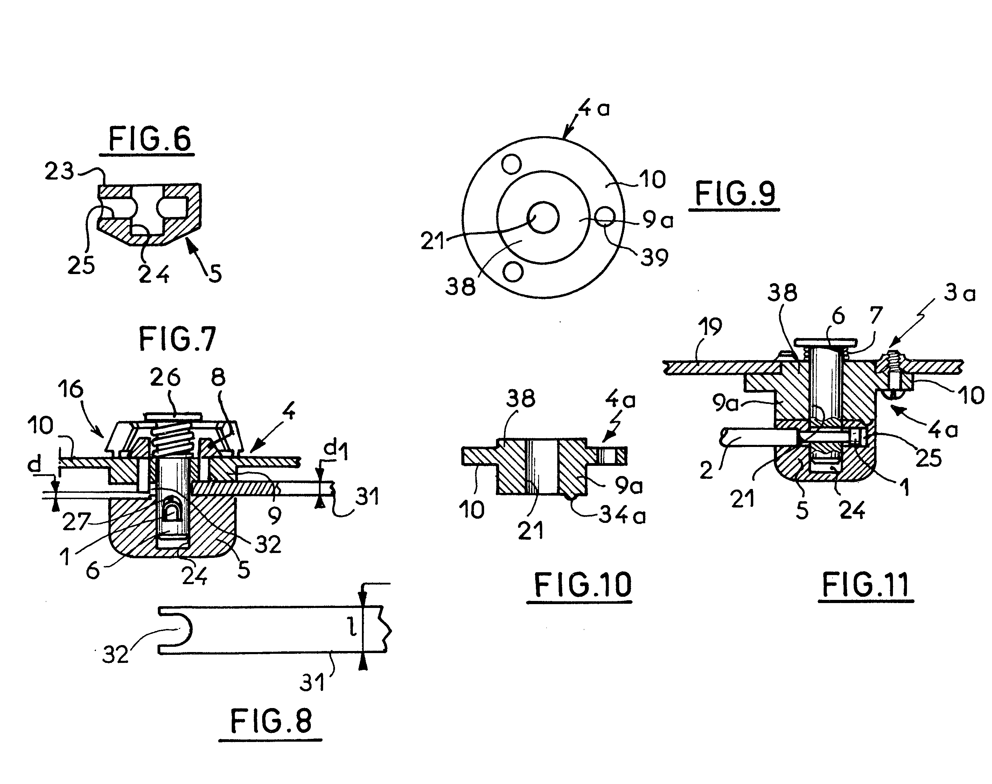

Le palier 5 (Fig. 6) a une forme générale cylindrique à partie inférieure bombée et à face supérieure 23 plane, de diamètre égal à celui du corps 9 du support 4. Il présente un trou vertical borgne 24, de même diamètre que le trou 21 du support 4, qui part du centre de la face 23 et que coupe un trou horizontal borgne 25 au diamètre du bras 2 du pare-soleil.

Le tirant 6 est constitué d'une tige cylindrique au diamètre des trous 21 et 24 portant une tête 26 à son extrémité supérieure. Près de son extrémité inférieure, cette tige présente un orifice transversal 27 dont la section (Fig. 2) est constituée d'un demi-cercle supérieur ayant le diamètre du trou 25, de deux segments verticaux et d'une base horizontale 28.

Le poussoir 8 (Fig. 5) comprend une bague 29 dont la surface extérieure est tronconique et conjuguée de la surface intérieure 17 de la bague expansible 16. De la base de cette bague 29 partent quatre jambes de guidage 30 adaptées pour coulisser dans les passages 22 du support 4 et de longueur supérieure d'une grandeur $\underline{d}$ à la longueur de ceux-ci (Fig. 7).

5

Pour monter le dispositif 3, on utilise une languette 31 rectangulaire, de forme allongée (Fig. 8), dont l'épaisseur $d^1$ est un peu supérieure à la distance $d$ précitée (Fig. 7) et dont la largeur $l$ est inférieure à l'intervalle circonférentiel séparant les jambes 30 du poussoir 8. La languette 31 présente à une extrémité une encoche 32 dont la largeur est un peu supérieure au diamètre du tirant 6 et qui débouche sur le petit côté correspondant de la languette.

Le poussoir 8 est mis en place sur le support 4. Il repose sur la face supérieure 11 de celui-ci, sans toucher les pattes 12, qui sont rétractées. Le ressort 7 est enfilé sur le tirant 6, celui-ci est introduit dans les trous 21 et 24 et pressé vers le bas en comprimant le ressort 7, et le bras 2 est introduit dans le trou 25 et à travers l'orifice 27 du tirant. Celui-ci est alors relâché, mais on maintient la compression du ressort 7 en tirant vers le bas le palier 5 pour introduire la languette 31 entre deux jambes 30 du poussoir jusqu'à ce que le tirant 6 se trouve dans l'encoche 32. Le palier 5 est alors relâché, et le dispositif se trouve dans l'état représenté à la Fig. 7, où la languette 31 est serrée entre ce palier et la face inférieure du corps 9 du support 4, où le poussoir 7 est libre et où par conséquent la bague 16 est rétractée.

On introduit alors la bague 16 dans le perçage 20 de la paroi 19 jusqu'à application de la collerette 10 sur la face inférieure de la paroi 19, et l'on retire la languette 31. Le ressort 7 sollicite donc le bras 2 vers le haut, et celui-ci transmet cet effort au palier 5 et, de là, aux jambes 30 du poussoir 8.Ce dernier s'applique contre la face intérieure 17 de la bague 16 et, par effet de coin, provoque l'expansion de celle-ci et, par suite, l'engagement de la gorge 18 sur le pourtout du perçage 20, avec un certain serrage de celui-ci.

6

Dans cet état monté (Fig. 1 et 2), sous l'effet du ressort 7, le palier 5 s'appuie vers le haut sur la base plane des jambes 30, la partie d'extrémité 1 du bras 2 s'appuie par deux régions espacées contre la génératrice supérieure du trou 25 et, entre ces régions, sur la base plane 28 de l'orifice du tirant 6. Il est clair que le palier 5 peut ainsi tourner autour de l'axe X-X, avec le bras 2, avec un certain couple résistant, et que, de même, ce bras peut tourner autour de son axe Y-Y, dans le palier 5, avec un certain couple résistant. La valeur des deux couples résistants est déterminée par la raideur du ressort 7, par les coefficients de frottement des matières utilisées pour les différentes pièces du dispositif 3 et pour le bras 2 et par les aires des surfaces frottantes.

Comme représenté aux Fig. 1 et 2, on peut prévoir des moyens pour assurer plusieurs positions stables du bras: d'une part, en rotation autour de l'axe X-X, une ou plusieurs empreintes 33 prévues dans la face supérieure plane du palier 5 coopèrent avec un petit relief bombé 34 (Fig. 5) en saillie sur la base d'une jambe 28; d'autre part, en rotation autour de l'axe Y-Y, le bras 2 présente un méplat 35 qui coopère avec la base plane 28 de l'orifice du tirant 6 lorsque le pare-soleil se trouve en position inactive relevée. D'autres méplats peuvent bien entendu être ajoutés sur le bras 2 si on le désire. Comme représenté à la Fig. 1, le méplat 35 est ménagé dans une région du bras 2 de diamètre légèrement réduit formant près de l'extrémité de celui-ci un épaulement 36 qui empêche l'extraction inopinée du bras 2 hors du trou 25, d'autres moyens de retenue axiale pouvant bien entendu être prévus à la place de cet épaulement. Un téton 37 en saillie sur la face supérieure de la collerette 10 du support 4 positionne ce dernier angulairement en pénétrant dans un trou prévu à côté du perçage 20 dans la paroi 19.

7

Pour démonter le dispositif 3, il suffit de tirer vers le bas le palier 5. Ceci libère le poussoir 8, qui retombe à sa position de la Fig. 7 en laissant la bague 16 se rétracter à un diamètre inférieur à celui du perçage 20 sous l'effet de la traction exercée sur le support 4 par l'intermédiaire du tirant 6 et grâce à l'inclinaison de la surface 15 des pattes 12. L'ensemble peut alors être extrait vers le bas.

Les Fig. 9 à 11 représentent un mode de réalisation simplifié $3^a$ dépourvu de poussoir. Le support $4^a$ ne comporte plus la bague expansible 16 et les passages 22, mais il présente une partie centrale surélevée 38 au diamètre du perçage 20, ainsi que plusieurs trous à vis périphériques 39. A part le mode de fixation du support $4^a$ sur l'élément de pavillon 19, pourvu de trous taraudés appropriés, et le fait que la face supérieure plane du palier 5 est directement en contact frottant avec la face inférieure plane du corps $9^a$ du support $4^a$, le dispositif $3^a$ est identique au dispositif 3 et fonctionne de la même manière.

Pour les positions angulaires stables du palier 5, on prévoit bien entendu un relief $34^a$ sur la face inférieure du corps $9^a$.

En variante, les axes X-X et Y-Y peuvent n'être qu'à peu près perpendiculaires l'un à l'autre, et l'axe X-X peut être plus ou moins incliné sur la verticale. De plus, le ressort 7 peut être remplacé par un manchon en élastomère, une rondelle Belleville ou analogue. Le tirant 6 peut être en tôle emboutie. La forme extérieure du corps 9 du support 4 ainsi que celle de la collerette 10 et du palier 5 peut être quelconque, au choix du constructeur. Le positionnement angulaire du support 4, aux Fig. 1 à 6, peut être obtenu par d'autres moyens que le téton 37, par exemple par une dissymétrie

8

du perçage 20 constituée par une excroissance intérieure pénétrant entre deux pattes de la bague expansible 16.

Une autre variante (non représentée) du dispositif des Fig. 1 à 6 est la suivante: certaines pattes 12 de la bague expansible 16 sont supprimées, et toutes les pattes 12 restantes surplombent les passages 22. De plus, le poussoir 8 est inversé: sa bague 29 est cylindrique, et les jambes 30 partent de celle-ci vers le haut et comportent à leur extrémité supérieure une surface tronconique conjuguée de la surface intérieure 17 de la bague 16. Le relief bombé 34 fait saillie sur la face inférieure de la bague 29. Lors du montage, les jambes 30 sont introduites de bas en haut dans les passages 22, et, lors de l'extraction de la languette 31, c'est l'extrémité supérieure de ces jambes qui attaque la surface intérieure 17 de la bague 16 pour provoquer l'expansion de celle-ci.

Bien entendu, la partie du bras 2 extérieure au palier 5 peut être pourvue d'un revêtement quelconque, en particulier d'un garnissage assorti à celui du pare-soleil.

9
## REVENDICATIONS

1. Dispositif de montage d'un bras de support et d'articulation de pare-soleil de véhicule, du type comprenant un support (4, 4$^a$) destiné à être fixé de façon amovible devant un perçage (20) d'un élément (19) de pavillon de véhicule et présentant un trou à peu près vertical (21),et un palier (5) monté rotatif dans ce support autour de l'axe dudit trou et présentant un trou (24) à peu près vertical coaxial à celui (21) du support et un trou à peu près horizontal (25) destiné à recevoir le bras (2)à rotation, caractérisé en ce que les deux trous (24, 25) du palier (5) se rencontrent, en ce qu'un tirant (6),présentant un orifice(27)à peu près horizontal pour le passage du bras est enfilé dans les deux trous verticaux (21, 24), et en ce qu'un organe élastique (7) prenant appui sur la face supérieure du support (4; 4$^a$) sollicite le tirant (6) vers le haut.

2. Dispositif suivant la revendication 1, caractérisé en ce que le palier (5) comporte un ou plusieurs reliefs (33) de positionnement angulaire par rapport au support (4; 4$^a$).

3. Dispositif suivant l'une des revendications 1 et 2 caractérisé en ce que l'orifice (27) du tirant (6) présente un méplat inférieur (28) destiné à coopérer, dans une position prédéterminée du bras (2) autour de son propre axe (Y-Y) avec un méplat (35) prévu sur ce bras.

4. Dispositif suivant la revendication 3, caractérisé en ce que le bras (2) comporte des moyens (36) de retenue axiale.

5. Dispositif suivant l'une quelconque des revendications 1 à 4,caractérisé en ce que l'organe élastique(7) est un ressort hélicoïdal entourant le tirant (6) et comprimé entre une tête (26) prévue à l'extrémité supérieure de celui-ci et la face supérieure du support (4, 4$^a$).

10

6.- Dispositif suivant l'une quelconque des revendications 1 à 5, caractérisé en ce que le support (4; 4$^a$) présente un relief excentré (37) de positionnement angulaire destiné à pénétrer dans un trou de l'élément de pavillon (19) situé à côté dudit perçage (20).

7.- Dispositif suivant l'une quelconque des revendications 1 à 6, caractérisé en ce que le support (4$^a$) présente sur sa périphérie des trous à vis (39) et éventuellement, sur sa face supérieure, une saillie (38) de centrage dans le perçage (20) de l'élément de pavillon (19).

8.- Dispositif suivant l'une quelconque des revendications 1 à 6, caractérisé en ce que sur la face supérieure du support (4) fait saillie une bague radialement expansible (16) qui présente une surface intérieure convergeant vers le haut (17) et dont le diamètre maximal au repos est un peu supérieur à celui dudit perçage (20) et en ce qu'un poussoir (8), qui possède des jambes (30) traversant des passages verticaux (22) du support (4) qui entourent le trou vertical (21) de celui-ci, présente à sa partie supérieure (29) une surface périphérique convergente vers le haut et adaptée pour attaquer la surface intérieure de la bague expansible (16).

9.- Dispositif suivant la revendication 8, caractérisé en ce que la bague expansible (16) présente à sa base une gorge (18) se rétrécissant d'une hauteur ($h^1$) supérieure à l'épaisseur (e) de l'élément de pavillon (19) à une hauteur ($h^2$) inférieure à cette épaisseur.

10.- Dispositif suivant l'une des revendications 8 et 9, caractérisé en ce qu'il comprend une languette (31) qui est pourvue à une extrémité d'une encoche (32) de largeur au moins égale au diamètre du tirant (6) et qui peut être insérée entre le support (4) et le palier (5) en passant entre deux jambes (30) du poussoir (8).

0036796

1/2

FIG.1

FIG.2

FIG.3

FIG.4

FIG.5

FIG.9

FIG.11

FIG.10

FIG.6

FIG.7

FIG.8

RAPPORT DE RECHERCHE EUROPEENNE

Office européen
des brevets

Numéro de la demande

00367.96
EP 81 40 0958

| Catégorie | Citation du document avec indication, en cas de besoin, des parties pertinentes | Revendication concernée |
|---|---|---|
| **DOCUMENTS CONSIDERES COMME PERTINENTS** | | |
| X | DE - U - 7 222 529 (HAPPICH)<br>* Abrégé; figure 1 *<br><br>-- | 1,4,6,10 |
| A | US - A - 3 017 217 (KEATING)<br>* Colonne 1, ligne 56 - colonne 3, ligne 26; figures 1-4 *<br><br>-- | 1 |
| A | FR - A - 1 601 745 (HAPPICH)<br>* Page 2, colonne de gauche, ligne 35 - page 3, colonne de droite, ligne 3; figures 1-6 *<br><br>-- | 1 |
| A | GB - A - 1 123 693 (HOMERTON)<br>* Page 1, ligne 51 - page 2, ligne 50; figures 1-5 *<br><br>-- | 1 |
| A | GB - A - 1 251 479 (FORD)<br>* Page 1, lignes 38-79; figure 2 *<br><br>-- | 1 |
| A | US - A - 2 698 958 (ADAMS)<br>* Colonne 1, ligne 60 - colonne 4, ligne 2; figures 4-7 *<br><br>-- | 1 |
| A | FR - A - 2 372 042 (HAPPICH)<br>* Page 4, lignes 6-27; figure 2 *<br><br>--<br><br>./. | 1 |

CLASSEMENT DE LA DEMANDE (Int. Cl.3)

B 60 J 3/02

DOMAINES TECHNIQUES RECHERCHES (Int. Cl.3)

B 60 J 3/

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 09-06-1981 | AYITER |

OEB Form 1503.1   06.78

| Catégorie | Citation du document avec indication, en cas de besoin, des parties pertinentes | Revendication concernée |
|---|---|---|
| A | US - A - 2 518 766 (EXNER)<br><br>* Colonne 1, ligne 31 - colonne 2, ligne 18; figures 1,2 * | 1 |
| A | US - A - 2 583 857 (KOPPINGER)<br><br>* Colonne 3, ligne 5 - colonne 4, ligne 28; figures 2,6-9 * | 1 |

**DOCUMENTS CONSIDERES COMME PERTINENTS**

**CLASSEMENT DE LA DEMANDE (int. Cl. 3)**

**DOMAINES TECHNIQUES RECHERCHES (int. Cl. 3)**